# EUROPÄISCHE PATENTSCHRIFT

(11) **EP 2 454 803 B1**
(45) Veröffentlichungstag und Bekanntmachung des Hinweises auf die Patenterteilung: **31.05.2017**
(21) Anmeldenummer: 10732917.9
(22) Anmeldetag: 07.07.2010
(51) Int. Cl.: H02K 15/03, H02K 1/27, H02K 1/16, H02K 7/18, H02K 15/16, H02K 5/18

(54) **RINGFÖRMIGER ROTOR FÜR EINE ELEKTRISCHE MASCHINE**
ANNULAR ROTOR FOR AN ELECTRIC MACHINE
ROTOR ANNULAIRE POUR UN MOTEUR ÉLECTRIQUE

(30) Priorität: 13.07.2009 DE 102009032885
(43) Veröffentlichungstag der Anmeldung: 23.05.2012
(73) Patentinhaber: Siemens Aktiengesellschaft, 80333 München (DE)
(72) Erfinder: JUNGE, Martin, 94481 Grafenau (DE); JÖCKEL, Andreas, 90408 Nürnberg (DE)
(86) Internationale Anmeldenummer: PCT/EP2010/059705
(87) Internationale Veröffentlichungsnummer: WO 2011/006810

(56) Entgegenhaltungen:
- EP-A1- 1 536 543
- EP-A1- 2 063 117
- WO-A1-01/21956
- DE-A1-102004 031 329
- DE-A1-102006 061 372

## Beschreibung

Die Erfindung betrifft einen ringförmigen Läufer mit einer Hohlwelle für eine elektrische Maschine. Die Erfindung kommt insbesondere bei sehr großen elektrischen Maschinen wie beispielsweise getriebelosen Generatoren für Windkraftanlagen zum Einsatz.

Mit zunehmender Leistungsklasse werden getriebelose Windenergieanlagen zunehmend wettbewerbsfähig zu Anlagen, die mit einem Getriebe ausgestattet sind. Bei getriebelosen Windenergieanlagen ist die Rotornabe direkt mit einem Synchrongenerator verbunden. Hauptvorteil einer solchen Konstruktion ist der im Vergleich zu Windkraftanlagen mit Generator deutlich einfachere Aufbau, der weniger rotierende Maschinenkomponenten erfordert. Dies hat einen reduzierten Wartungsaufwand und eine erhöhte Verfügbarkeit der Anlage zur Folge.

Insbesondere sehr große Windkraftanlagen arbeiten in der Regel mit sehr niedrigen Drehzahlen. Daher müssen solche Anlagen bei einer getriebelosen Ausführung mit sehr großen und schweren Generatoren ausgestattet werden. Der Durchmesser dieser Maschinen überschreitet dann leicht die Grenze von 4 bis 5 m.

Generatoren für getriebelose Windkraftanlagen umfassen häufig einen ringförmigen Läufer mit einer Hohlwelle. Eine derartige elektrische Maschine ist beispielsweise aus WO 2006/032969 A2 bekannt. Diese Schrift offenbart einen Rotor, der in mehrere Segmente unterteilt ist, wobei die Segmente auf einen Rohrring des Rotors aufgeschoben sind.

Durch die zunehmende Größe der Windkraftgeneratoren, die die höheren Leistungen dieser Anlagen zwangsläufig mit sich bringen, wird deren Montage immer schwieriger. Getriebelose Turbinen von Windkraft- oder auch Gezeitenkraftwerken stellen jedoch auch große Herausforderungen hinsichtlich Transport und Logistik.

**Aus der** EP 2 063 117 A1 **ist ein Generator einer getriebelosen Windkraftanlage mit einem ringförmigen Läufer bekannt, wobei der Läufer in Umfangsrichtung in mehrere teilringförmige Läufersegmente unterteilt ist und wobei die geschlossene Ringform des Läufers durch Trennen der Läufersegmente voneinander aufhebbar ist, und einem Ständer, der in Umfangsrichtung in mehrere teilringförmige Ständersegmente unterteilt ist.**

Der Erfindung liegt daher die Aufgabe zugrunde, den Transport großer elektrischer Maschinen zu vereinfachen.

Die Aufgabe wird durch ein Verfahren zur Herstellung eines Generators nach Anspruch 1 gelöst.

Diese Aufgabe wird ferner gelöst durch einen Generator mit den Merkmalen des Anspruchs 3 gelöst.

Vorteilhafte Ausführungsformen der Erfindung sind in den Unteransprüchen genannt.

Der Kerngedanke der Erfindung ist es, den Läufer der elektrischen Maschine, bei der es sich insbesondere um eine permanenterregte Synchronmaschine handelt, in Umfangsrichtung in mehrere teilringförmige Läufersegmente zu unterteilen. Diese Unterteilung geschieht vorzugsweise längs radialer Trennfugen ähnlich, wie eine Torte in einzelne Tortenstücke geteilt wird. Zerlegt man dem erfindungsgemäßen ringförmigen Läufer in seine Läufersegmente, so wird die geschlossene Ringform des Hohlwellenläufers aufgelöst. Der Läufer nimmt in der zerlegten Form deutlich weniger Volumen ein als ein vollständiger Ringrotor. Schon eine Zerlegung in nur zwei teilringförmige Läufersegmente, die jeweils einen Kreisbogen von 180° aufspannen, bewirkt eine deutliche Volumenreduzierung, die einen Transport eines solchen Läufers über die Straße ermöglichen kann. Erfindungsgemäß weist jedes Läufersegment mindestens einen Permanentmagnet auf. Hierdurch ergibt sich insbesondere eine permanenterregte Synchronmaschine. Die Verwendung von Permanentmagneten auf dem Läufer zur Erzeugung eines Erregerfeldes hat den Vorteil, dass bei der Montage der einzelnen Läufersegmente zu dem ringförmigen Läufer keine elektrischen Verbindungen zwischen den einzelnen Läufersegmenten geschaffen werden müssen. Die Permanentmagnete werden in Magnettaschen angeordnet, die sich auf den Läufersegmenten befinden.

In weiterer vorteilhafter Ausführung der Erfindung kann auch auf eine mechanische Verbindung der einzelnen Läufersegmente untereinander verzichtet werden, wenn der Läufer an beiden Stirnseiten jeweils einen ringförmigen Flansch umfasst, mit dem die Läufersegmente verbunden sind. Bei diesem Flansch kann es sich beispielsweise um den Turbinenflansch einer Windkraftanlage handeln. Hierbei könnten die teilringförmigen Läufersegmente direkt auf der Baustelle an den Flansch der Turbine einzeln anmontiert werden.

Eine kostengünstige Fertigung der Läufersegmente kann durch eine Ausführungsform der Erfindung gewährleistet werden, bei der die Läufersegmente in axialer Richtung des Läufers gestapelte teilringförmige Elektrobleche umfassen. Durch den Aufbau des Läufers aus einzelnen voneinander isolierten Elektroblechen werden Hysterese- und Wirbelstromverluste im Läufer reduziert.

Die Erfindung ermöglicht eine Ausgestaltung des Läufers sowohl als Innenläufer als auch als Außenläufer.

Im Regelfall soll ein kompletter Generator oder ein kompletter Motor zu seinem späteren Einsatzort transportiert werden. Entsprechend kennzeichnet sich die Erfindung durch eine elektrische Maschine mit einem Läufer nach einer der zuvor beschriebenen Ausführungsformen und einem Ständer, der in Umfangsrichtung in mehrere teilringförmige Ständersegmente unterteilt ist, wobei die Anzahl der Ständersegmente gleich der Anzahl der Läufersegmente ist. Die einzelnen Ständersegmente sind über radial ausgerichtete Trennfugen voneinander beabstandet. Ein derartiger Aufbau ermöglicht eine gepaarte Auslieferung und Montage der elektrischen Maschine. D.h., ein Läufersegment wird zusammen mit einem dazugehörigen Ständersegment zunächst paarweise zum späteren Einsatzort transportiert. Anschließend werden diese im weiteren Verlauf der Erfindung auch als Maschinenelemente bezeichneten Läufer-/Ständersegmentpaare zur kompletten elektrischen Maschine zusammengefügt.

Insbesondere bei permanenterregten elektrischen Maschinen ermöglicht diese gepaarte Auslieferung von Ständer- und Läufersegmenten einen deutlich einfacheren Umgang mit den sehr starken Permanentmagneten. Aufgrund deren enormer Anziehungskräfte müssen beim Transport von Maschinenteilen, die mit Permanentmagneten bestückt sind, sehr strenge Sicherheitsauflagen eingehalten werden. Durch die Kopplung des Läufersegmentes mit dem Ständersegment werden jedoch die Permanentmagneten bereits magnetisch zur Umgebung abgeschirmt und stellen daher nicht mehr eine so große Gefahr dar. Auch die Montage der elektrischen Maschine wird deutlich vereinfacht, wenn Läufer- und Ständersegmente paarweise aneinander montiert werden.

Hierbei ist eine Ausgestaltung der Erfindung vorteilhaft, bei der die elektrische Maschine zu jedem Läufersegment ein Ständersegment umfasst, dessen kreisbogenförmiger Umfang einen im Wesentlichen gleichen Mittelpunktswinkel aufweist. Die auf diese Art und Weise resultierenden Maschinenelemente sind ebenfalls kreisbogenförmig, so dass durch deren Aneinanderfügen eine elektrische Maschine mit Hohlwellenläufer entsteht.

Bei der erfindungsgemäßen Herstellung der elektrischen Maschine werden zunächst die teilringförmigen Läufersegmente mit den Permanentmagneten bestückt und anschließend die teilringförmigen Ständersegmente mit Spulen zur Erzeugung des Ankerfeldes bestückt. Anschließend werden die bereits erwähnten ebenfalls teilringförmigen Maschinenelemente geschaffen, in dem jeweils ein mit Permanentmagneten bestücktes Läufersegment mit einem mit den Spulen bestückten teilringförmigen Ständersegment verbunden wird. Ständersegment und Läufersegment werden hierbei über geeignete Verbindungselemente derart miteinander verbunden, dass sie über den Luftspalt, der im zusammengebauten Zustand der elektrischen Maschine Ständer und Läufer voneinander trennt, beabstandet sind.

Ein solches Maschinenelement kann nun zu seinem späteren Einsatzort deutlich einfacher transportiert werden, als dies, wie aus dem Stand der Technik bekannt, der Transport eines vollständigen Läufers und Ständers ermöglicht.

Erst auf der Baustelle werden die so erstellten Maschinenelemente zu einem geschlossenen Ring zusammengefügt. Wird die elektrische Maschine an einer Windkraftanlage als Windgenerator montiert, können die vormontierten Maschinenelemente erfindungsgemäß direkt an einen Flansch der Turbine der Windkraftanlage montiert werden, so dass die geschlossene Ringform des Läufers direkt bei der Montage an den besagten Flansch entsteht. Bei dieser Art der Montage wird jeweils ein Läufersegment mit einem Ständersegment gleichzeitig am Flansch montiert. Die Permanentmagnete des Läufers sind auch während der Montage durch das Ständersegment abgeschirmt. Ständersegment und Läufersegment sind hierbei durch die bereits erwähnten Verbindungselemente voneinander beabstandet. Die Schwierigkeiten, die bei einem Einfügen eines Rotors mit Permanentmagneten in eine Statorbohrung aufgrund der hohen magnetischen Anziehungskräfte und des geringen Luftspaltes zwischen Ständer und Rotor aus dem Stand der Technik bekannt sind, bleiben durch das erfindungsgemäße Montageverfahren aus.

Im Folgenden wird die Erfindung anhand der in den Figuren dargestellten Ausführungsbeispiele näher beschrieben und erläutert. Es zeigen:
- FIG 1: eine erste Ausführung eines Maschinenelementes umfassend ein Läufer- und ein Ständersegment,
- FIG 2: eine zweite Ausführung eines Maschinenelementes umfassend ein Läufer- und ein Ständersegment,
- FIG 3: Elektroblechformen der Segmente eines Innenläufergenerators mit Oberflächenkühlung,
- FIG 4: Elektroblechformen der Segmente eines Innenläufergenerators mit Innenkühlung,
- FIG 5: Elektroblechformen der Segmente eines Außenläufergenerators mit Oberflächenkühlung,
- FIG 6: Elektroblechformen der Segmente eines Außenläufergenerators mit Innenkühlung und
- FIG 7: eine Windkraftanlage mit einer elektrischen Maschine und einem nach einer Ausführung der Erfindung gestalteten Läufer.

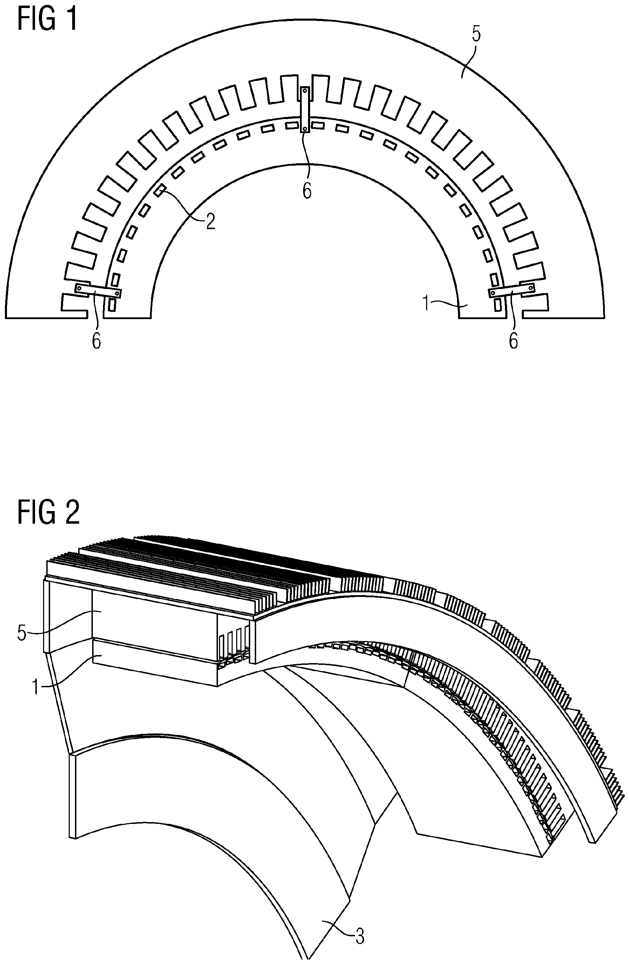

FIG 1 zeigt eine erste Ausführung eines Maschinenelementes umfassend ein Läufer- und ein Ständersegment 1, 5. Sowohl das Läufersegment 1 als auch das Ständersegment 5 spannen einen Kreisbogen von 180° auf. Fügt man zwei Läufersegmente 1 der dargestellten Bauform aneinander, so entsteht ein vollständiger Läufer einer elektrischen Maschine mit Hohlwelle.

Ebenso können zwei Ständersegmente 5 der dargestellten Bauform zu einem geschlossenen Ring ergänzt werden, so dass der vollständige Ständer der elektrischen Maschine entsteht.

Bei der hier dargestellten elektrischen Maschine handelt es sich um eine permanenterregte Synchronmaschine. Das Läufersegment 1, welches hier als Innenläufer ausgebildet ist, ist entsprechend mit Permanentmagneten bestückt. Die Permanentmagnete sind als vergrabene Magnete ausgeführt; d.h., sie sind in Taschen eingefügt, die am Läufersegment 1 über den Umfang verteilt ausgebildet sind. Die Permanentmagnete können in diese Taschen in axialer Richtung eingeschoben werden.

Da bei dem hier dargestellten Läufer keinerlei elektrische Erregung vorgesehen ist, ist auch der Aufbau des Läufers aus zwei derartigen Segmenten sehr einfach. Es müssen keine elektrischen Verbindungen zwischen den Läufersegmenten 1 bei der Montage installiert werden.

Das Ständersegment 5 ist mit hier nicht erkennbaren Nuten ausgeführt, in die Spulen zur Erzeugung eines Drehfeldes eingelassen sind.

Das mit den Spulen bestückte Ständersegment 5 ist mit dem mit Permanentmagneten bestückten Läufersegment 1 über Verbindungselemente 6 zunächst starr verbunden, wobei ein Luftspalt zwischen dem Läufersegment 1 und dem Ständersegment 5 sichergestellt ist, über den die beiden Segmente voneinander beabstandet sind. Diese Verbindungselemente 6 werden erst dann gelöst, wenn das dargestellte Maschinenelement umfassend das Läufersegment 1 und das Ständersegment 5 mit einem weiteren Maschinenelement gleicher Bauart zu der kompletten elektrischen Maschine zusammengebaut ist. Erst wenn die Ständersegmente 5 und die Läufersegmente 1 jeweils auf einem ringförmigen Flansch montiert sind, werden die Verbindungselemente 6 gelöst. Bei dieser Art der Montage sind die Permanentmagnete des Läufersegmentes 1 während des kompletten Aufbauprozesses durch die Ständersegmente 5 abgeschirmt. Es wird die Gefahr vermieden, dass Fremdteile von den starken Anziehungskräften der Permanentmagnete angezogen werden und somit Schäden an der Maschine oder gar an den mit der Montage beschäftigen Menschen verursachen können. Der in der Praxis äußerst schwierige Montageprozess bei herkömmlichen großen Generatoren, bei denen ein fertiger Läufer in einen fertigen Ständer unter Einhaltung des geringen Luftspaltes eingeführt werden muss, entfällt.

Durch die dargestellte Segmentierung der Maschine in Ständersegmente 5 und Läufersegmente 1 wird erstmalig eine Skalierung von elektrischen Maschinen hin zu größeren Leistungen von 5 MW, 8 MW bzw. 10 MW bei 10 bis 15 rpm möglich, wie es beispielsweise bei modernen Windkraftanlagen gefordert wird. Derartige Maschinen erfordern einen Rotordurchmesser von 12 bis 14 m, wodurch ein Straßentransport kompletter Läufer bzw. kompletter Ständer nahezu unmöglich gemacht wird.

FIG 2 zeigt eine zweite Ausführung eines Maschinenelementes umfassend ein Läufer- und ein Ständersegment 1, 5. Funktional gleich wirkende Elemente werden hier sowie in der gesamten Anmeldung mit gleichen Bezugszeichen versehen.

Im Unterschied zu dem in FIG 1 dargestellten Maschinenelement schließt das hier dargestellte Maschinenelement lediglich einen Kreisbogen von 120° ein. Entsprechend müssten jeweils drei Läufersegmente 1 zu einem fertigen Läufer aneinander gefügt werden. Analog wird der komplette Ständer aus drei der dargestellten Ständersegmente 5 aufgebaut. In FIG 2 ist ein ringförmiger Flansch 3 zu erkennen, auf den das Läufersegment bei der Maschinenmontage montiert wird. Ein entsprechender ringförmiger Flansch ist auch für das Ständersegment 5 vorgesehen. Erst wenn die Läufersegmente 1 zusammen mit den Ständersegmenten 5 in Form von kreisbogenförmigen Maschinenelementen komplett auf den Flanschen montiert sind, werden die in FIG 1 dargestellten Verbindungselemente 6 gelöst, so dass die Maschine rotationsfähig ist.

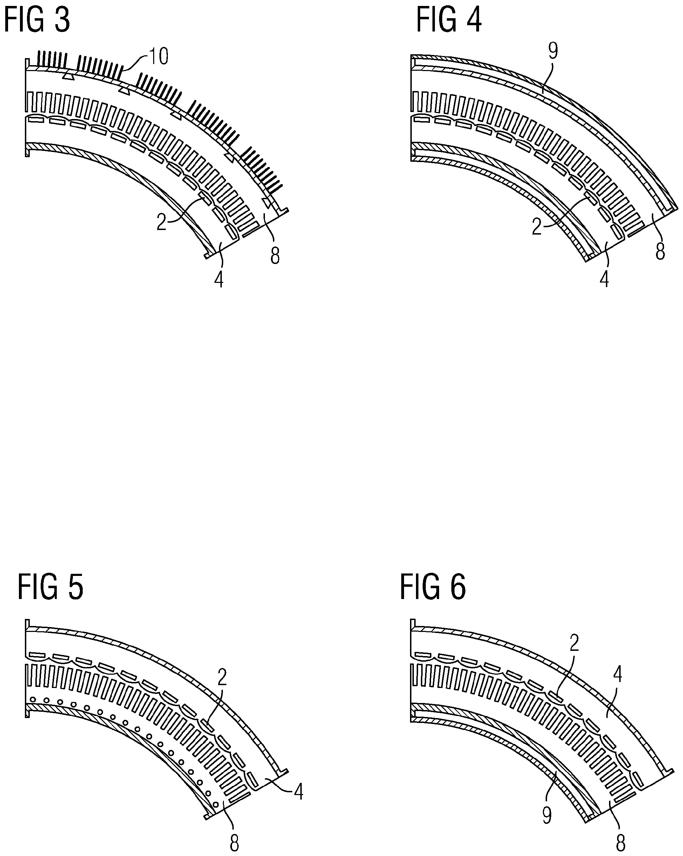

FIG 3 zeigt Elektroblechformen der Segmente eines Innenläufergenerators mit Oberflächenkühlung. Dargestellt sind Elektrobleche 4 des Läufers, die axial aufeinandergestapelt die zuvor beschriebenen Läufersegmente bilden. In diese Elektrobleche 4 sind Löcher eingestanzt, durch die die Magnettaschen zur Aufnahme der Permanentmagnete 2 gebildet werden. In diese Magnettaschen können die Permanentmagnete 2 in axialer Richtung eingeführt werden.

Ferner sind weitere Elektrobleche 8 zur Fertigung der Ständersegmente dargestellt. In diese sind die späteren Nutformen eingestanzt. Weiterhin umfassen die weiteren Elektrobleche 8 Kühlrippen 10, die eine Oberflächenkühlung ermöglichen.

FIG 4 zeigt weitere Elektroblechformen der Segmente eines Innenläufergenerators mit Innenkühlung. Diese enthalten radial verlaufende Kühlschlitze 9, um eine Innenkühlung zu ermöglichen.

Die FIG 5 und 6 zeigen Elektroblechformen für Ausführungen des Generators als Außenläufer. Auch für einen Außenläufer lassen sich die bereits aus den Figuren 3 und 4 bekannten Kühlungskonzepte in Verbindung mit der erfindungsgemäßen Segmentierung realisieren.

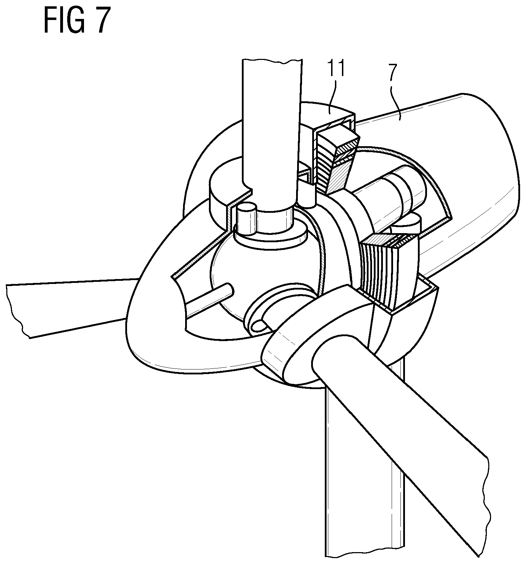

FIG 7 zeigt eine Windkraftanlage 7 mit einer elektrischen Maschine 11 und einem nach einer Ausführung der Erfindung gestalteten Läufer. Die elektrische Maschine ist als permanenterregte Synchronmaschine mit Hohlwelle ausgeführt. Wie bereits in den Ausführungsformen zuvor beschrieben, sind Läufer und Ständer segmentiert aufgebaut. Da bei der hier dargestellten direkt angetriebenen Windkraftanlage sehr große Generatoren zum Einsatz kommen, wird erst durch die segmentierte Ausführung von Ständer und Läufer ein Transport der elektrischen Maschine 11 zum Aufbauort der Windkraftanlage über die Straße ermöglicht.

## Patentansprüche

1. Verfahren zur Herstellung eines Generators mit folgenden Verfahrensschritten:
i) Mehrere teilringförmige Läufersegmente (1) werden mit Permanentmagneten (2) bestückt, in dem diese in Magnettaschen der Läufersegmente (1) eingeschoben werden,
ii) mehrere teilringförmige Ständersegmente (5) werden mit Spulen bestückt,
iii) jeweils eines der teilringförmigen Läufersegmente (1) wird mit jeweils einem teilringförmigen Ständersegment (5) zu einem teilringförmigen Maschinenelement zusammengefügt, **wobei Ständersegment und Läufersegment über Verbindungselemente (6) derart miteinander verbunden werden, dass sie über den Luftspalt, der im zusammengebauten Zustand der elektrischen Maschine Ständer und Läufer voneinander.trennt beabstandet sind,**
iv) nach Schritt iii) erstellte Maschinenelemente werden zu einem geschlossenen Ring zusammengefügt, und direkt an einen Flansch einer Turbine einer Windkraftanlage (7) montiert,
v) danach werden die Verbindungselemente (6) zwischen Ständersegmente (5) und Läufersegmente (1) gelöst.

2. Verfahren nach Anspruch 1, wobei zur Herstellung der Läufersegmente (1) teilringförmige Elektrobleche (4) gestanzt werden und die gestanzten Elektrobleche (4) in axialer Richtung des Läufers gestapelt werden.

3. Generator einer getriebelosen Windkraftanlage hergestellt nach einem Verfahren nach Anspruch 1 oder 2 mit
- einem ringförmigen Läufer, wobei der Läufer in Umfangsrichtung in mehrere teilringförmige Läufersegmente (1) unterteilt ist und eine Hohlwelle aufweist, wobei die geschlossene Ringform des Läufers durch Trennen der Läufersegmente (1) voneinander aufhebbar ist, und
- einem Ständer, der in Umfangsrichtung in mehrere teilringförmige Ständersegmente (5) unterteilt ist, wobei die Anzahl der Ständersegmente (5) gleich der Anzahl der Läufersegmente (1) ist.

4. Generator nach Anspruch 3,
wobei jedes Läufersegment (1) mindestens einen Permanentmagnet (2) aufweist.

5. Generator nach Anspruch 4,
wobei die Läufersegmente (1) je Permanentmagnet (2) eine Magnettasche aufweisen, in der der Permanentmagnet (2) angeordnet ist.

6. Generator nach einem der vorhergehenden Ansprüche 3 bis 5, wobei der Läufer an beiden Stirnseiten jeweils einen ringförmigen Flansch (3) umfasst, mit dem die Läufersegmente (1) verbunden sind.

7. Generator nach einem der vorhergehenden Ansprüche 3 bis 6, wobei die Läufersegmente (1) in axialer Richtung des Läufers gestapelte teilringförmige Elektrobleche (4) umfassen.

8. Generator nach einem der vorhergehenden Ansprüche 3 bis 7, wobei der Läufer als Innenläufer ausgebildet ist.

9. Generator nach einem der Ansprüche 3 bis 7,
wobei der Läufer als Außenläufer ausgebildet ist.

10. Generator nach einem der Ansprüche 3 bis 9,
wobei der Generator zu jedem Läufersegment (1) ein Ständersegment (5) umfasst, dessen kreisbogenförmiger Umfang einen im Wesentlichen gleichen Mittelpunktswinkel aufweist.

11. Windkraftanlage (7) mit einem Generator nach einem der Ansprüche 3 bis 10.

## Claims

1. Method for producing a generator having the following steps of the method:
i) a plurality of partially annular rotor segments (1) are fitted with permanent magnets (2), in which said permanent magnets (2) are inserted into magnet pouches of the rotor segments (1),
ii) a plurality of partially annular stator segments (5) are fitted with coils,
iii) in each case one of the partially annular rotor segments (1) is joined to in each case one partially annular stator segment (5) to form a partially annular machine element, wherein stator segment and rotor segment are connected to each other via connecting elements (6) such that they are spaced apart via the air gap separating the stator and rotor from each other in the assembled condition of the electric machine,
iv) machine elements produced according to step iii) are joined to form a closed ring and mounted directly onto a flange of a turbine of a wind power plant (7),
v) the connecting elements (6) between stator segments (5) and rotor segments (1) are subsequently released.

2. Method according to claim 1, wherein partially annular magnetic steel sheets (4) are punched for producing the rotor segments (1) and the punched magnetic steel sheets (4) are stacked in the rotor's axial direction.

3. Generator of a gearless wind power plant produced according to a method according to claim 1 or 2, having
- an annular rotor, wherein the rotor is subdivided circumferentially into a plurality of partially annular rotor segments (1) and has a hollow shaft, wherein the closed ring shape of the rotor is able to be dissolved by separating the rotor segments (1) from each other, and
- a stator that is subdivided circumferentially into a plurality of partially annular stator segments (5), wherein the number of stator segments (5) is the same as the number of rotor segments (1).

4. Generator according to claim 3,
wherein each rotor segment (1) has at least one permanent magnet (2).

5. Generator according to claim 4,
wherein the rotor segments (1) have for each permanent magnet (2) a magnet pouch in which the permanent magnet (2) is located.

6. Generator according to one of the preceding claims 3 to 5, wherein the rotor includes on each of its two front sides an annular flange (3) to which the rotor segments (1) are joined.

7. Generator according to one of the preceding claims 3 to 6, wherein the rotor segments (1) include partially annular magnetic steel sheets (4) stacked in the axial direction of the rotor.

8. Generator according to one of the preceding claims 3 to 7, wherein the rotor is embodied as an internal rotor.

9. Generator according to one of claims 3 to 7,
wherein the rotor is embodied as an external rotor.

10. Generator according to one of claims 3 to 9,
wherein the generator includes for each rotor segment (1) a stator segment (5) whose arc-shaped circumference has a substantially identical central angle.

11. Wind power plant (7) having a generator according to one of claims 3 to 10.

## Revendications

1. Procédé de fabrication d'une génératrice comprenant les stades de procédé suivants :
i) on munit plusieurs segments (1) rotoriques, en forme d'anneaux partiels, d'aimants (2) permanents, qui sont insérés dans des poches pour aimants des segments (1) rotoriques,
ii) on munit plusieurs segments (5) statoriques, en forme d'anneaux partiels, de bobines,
iii) on assemble respectivement l'un des segments (1) rotoriques, en forme d'anneaux partiels, à respectivement un segment (5) statorique en forme d'anneau partiel, en un élément de machine en forme d'anneau partiel, le segment statorique et le segment rotorique étant reliés l'un à l'autre par des éléments (6) de liaison, de manière à être à distance par un entrefer qui sépare l'un de l'autre le stator et le rotor lorsque la machine électrique est à l'état monté,
iv) on assemble des éléments de machine, produits suivant le stade iii), en un anneau fermé et on le monte directement sur un flasque d'une turbine d'une éolienne (7),
v) ensuite, on enlève les éléments (6) de liaison entre des segments (5) statoriques et des segments (1) rotoriques.

2. Procédé suivant la revendication 1, dans lequel, pour fabriquer les segments (1) rotoriques, on découpe des tôles (4) électriques en forme d'anneaux partiels et on empile les tôles (4) électriques découpées dans la direction axiale du rotor.

3. Génératrice d'une éolienne sans transmission, fabriquée par un procédé suivant la revendication 1 ou 2, comprenant
- un rotor annulaire, le rotor étant subdivisé dans la direction périphérique en plusieurs segments (1) rotoriques en forme d'anneaux partiels et ayant un arbre creux, la forme annulaire fermée du rotor pouvant être supprimée en séparant les segments (1) rotoriques les uns des autres et
- un stator, qui est subdivisé dans la direction périphérique en plusieurs segments (5) statoriques en forme d'anneaux partiels, le nombre des segments (5) statoriques étant égal au nombre des segments (1) rotoriques.

4. Génératrice suivant la revendication 3,
dans laquelle chaque segment (1) rotorique a au moins un aimant (2) permanent.

5. Génératrice suivant la revendication 4,
dans laquelle les segments (1) rotoriques ont, pour chaque aimant (2) permanent, une poche pour aimant dans laquelle l'aimant (2) permanent est mis.

6. Génératrice suivant l'une des revendications précédentes 3 à 5,
dans laquelle le rotor comprend, sur ses deux côtés frontaux, respectivement un flasque (3) annulaire, par lequel les segments (1) rotoriques sont reliés.

7. Génératrice suivant l'une des revendications précédentes 3 à 6,
dans laquelle les segments (1) rotoriques comprennent des tôles (4) électriques en forme d'anneaux partiels, empilées dans la direction axiale du rotor.

8. Génératrice suivant l'une des revendications précédentes 3 à 7,
dans laquelle le rotor est constitué en rotor intérieur.

9. Génératrice suivant l'une des revendications 3 à 7,
dans laquelle le rotor est constitué en rotor extérieur.

10. Génératrice suivant l'une des revendications 3 à 9,
dans laquelle la génératrice comprend, pour chaque segment (1) rotorique, un segment (5) statorique, dont le pourtour en forme d'arc de cercle a sensiblement le même angle au centre.

11. Eolienne (7) ayant une génératrice suivant l'une des revendications 3 à 10.
